# EUROPEAN PATENT APPLICATION

(11) **EP 2 685 740 A1**
(43) Date of publication of application: **15.01.2014**
(21) Application number: 12305850.5
(22) Date of filing: 13.07.2012
(51) Int. Cl.: H04N 21/41, H04N 21/439, G11B 27/034, H04H 60/37, G06F 17/30, H04N 7/025

(54) **Method for synchronization of a second screen device**

(71) Applicant: Thomson Licensing, 92130 Issy-les-Moulineaux (FR)
(72) Inventor: Baum, Peter Georg, 30539 Hannover (DE); Donnan, Gary, 35500 Vitre (FR)
(74) Representative: Schmidt-Uhlig, Thomas

(57) **Abstract**

A method for synchronizing display of information on a second screen device (8) with display of audiovisual data on a main screen device (7) is described. The second screen device (8) detects (20) an occurrence of one of a plurality of predefined identifiers embedded in the audiovisual data displayed on the main screen device (7) and retrieves (22) information to be displayed associated to the detected identifier. The retrieved information is then displayed (23) on the second screen device (8). The audiovisual data is prepared for transmission by detecting (11) an occurrence of one of a plurality of predefined situations in the audiovisual data and inserting (13) an identifier associated to the detected predefined situation in the audiovisual data at or close to the point in time of occurrence of the predefined situation.

## Description

The invention relates to a solution for synchronization of a second screen device, and more specifically to a solution for synchronization of a second screen device with a main television screen in case of live events.

US 2011/0208587 A1 discloses a method for displaying text or image advertisements related to video content that is displayed in a video display window of a web page. For each advertisement a tag is embedded in the video content. The tags, and also the video content, are implemented in a programming environment and cause the appearance of advertisements embedded in the video content in a detail window outside the video display window. The video content and the tags indicating the advertisements to be displayed at predetermined times are generally produced by the same producer in advance of a sales season for the advertised material.

As nowadays using a tablet or laptop while watching television is becoming more and more common, these so-called 2nd screen or companion devices are a good target to show advertisements related to the program being watched. In addition, they can also be used for small programs (applications) related to the program. In both cases these 2nd screen devices help to increase the revenue of the broadcaster or content owner. For pre-produced media the main issue is to synchronize the 2nd screen with the content shown on the main screen, especially when the channel is switched or the program is time shifted. This synchronization can be done, for example, based on audio watermarking embedded in the content and detected via a microphone of the 2nd screen. Alternatively, if the television or a set-top box providing the content to the television have a means to transmit data to the 2nd screen, for example via WiFi or Bluetooth, timing information may be embedded in the meta data of the content. This timing information is then transmitted to the 2nd screen.

For live events, however, there is the problem that it is unknown before the event what will happen during the event. In other words, even if the 2nd screen is synchronized, it is unknown beforehand what to show on it.

It is thus an object of the present invention to propose a solution for synchronization of a second screen device with a main television screen in case of live events.

According to one aspect of the invention, a method for preparing audiovisual data for transmission comprises the steps of:
- retrieving the audiovisual data;
- detecting an occurrence of one of a plurality of predefined situations in the audiovisual data; and
- inserting an identifier associated to the detected predefined situation in the audiovisual data at or close to the point in time of occurrence of the predefined situation.

According to another aspect of the invention, a method for synchronizing display of information on a second screen device with display of audiovisual data on a main screen device comprises the steps of:
- with the second screen device, detecting an occurrence of one of a plurality of predefined identifiers embedded in the audiovisual data displayed on the main screen device;
- with the second screen device, retrieving information to be displayed associated to the detected identifier; and
- displaying the retrieved information on the second screen device.

Accordingly, a device for display of information in synchronization with display of audiovisual data on a main screen device is adapted to perform the steps of:
- detecting an occurrence of one of a plurality of predefined identifiers embedded in the audiovisual data displayed on the main screen device;
- retrieving information to be displayed associated to the detected identifier; and
- displaying the retrieved information.

According to the invention, a limited set of tags is predefined for an event, e.g. a live event. Each tag corresponds to a certain predefined situation that is expected or likely to occur during the event. The 2nd screen application is prepared to execute for each tag a certain action, e.g. to show a certain advertisement. During the live event a commentator watches and comments the event. Each time one of the predefined situations arises, he or she selects the corresponding tag on a tagging device, which then inserts the selected tag into the content. The 2nd screen application picks up the inserted tag and performs the predefined action. The action might also take other factors into account, like the localization of the viewer or his or her personal preferences. The personal preferences are preferably retrieved from the device running the 2nd screen application, e.g. a smartphone, a tablet, or a laptop, or from a special server. As a result, though there is a direct mapping between an event and a corresponding tag, there might be a multitude of actions mapped to one tag.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: shows an overview of a system implementing the present invention,
- Fig. 2: shows a method for preparing audiovisual data for transmission, and
- Fig. 3: depicts a method for synchronizing display of information on a second screen device with display of audiovisual data on a main screen device.

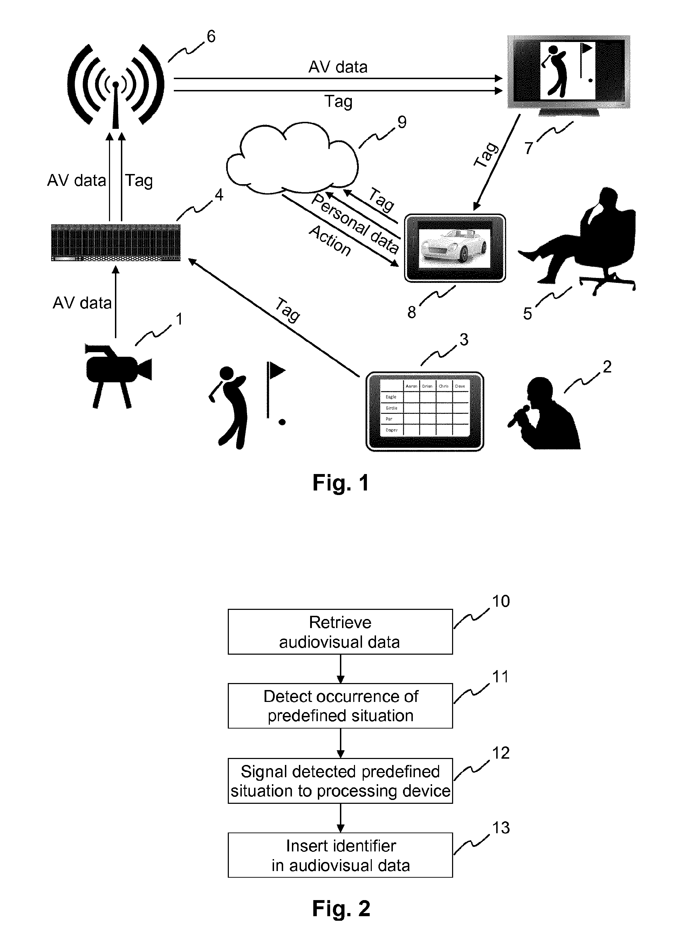

Fig. 1 gives an overview over a system implementing the present invention. For simplicity it will be explained with reference to a golf tournament. Of course, the solution according to the invention can be used for any live event. In addition, the solution is also useful for a fast and efficient processing of an already recorded event.

In each a golf tournament there are a limited number of players, with differing value with respect to sponsors and viewers. For each player there are certain situations which may arise, like playing an eagle or a ball lying in the rough or in a water hazard etc. For each player and each event an identifier or 'tag' is defined. For example "Aaron playing an eagle" corresponds to a first tag, "Aaron playing a birdie" is associated to a second tag, etc. For each tag an action is defined, which the application running on the 2nd screen should execute. For example, for the first tag the action might be "show advertisement of new XYZ car series", e.g. because XYZ is a sponsor of Aaron. For the second tag the action might be "show statistics about how often Aaron has played a birdie this year".

In order to implement the invention, during the live event, which is captured by a camera 1 in order to generate the video content, a commentator 2 not only comments the event, but also operates a tagging device 3, e.g. a tablet, which preferably shows all available predefined situations or a suitable selection therefrom. In case of an already recorded event, the video content is not captured by a camera 1, but retrieved from a storage system (not shown). The tagging device 3 is connected to a tag insertion device 4, which inserts tags into the broadcast stream of the event, e.g. by watermarking the audio or by inserting the tag into the metadata of the broadcast stream. Preferably, the tag is a numeric or alphanumeric value. If a predefined situation arises, e.g. "Brian plays a bogey", the commentator 2 presses a corresponding button on the tagging device 3 and the tag insertion device 4 inserts the corresponding tag into the broadcast stream. The tagged broadcast stream is transmitted to a consumer 5 via usual communication channels 6. Apparently, depending on the type of event and the predefined situations that might arise, the tagging may also be performed by an automated system without input from the commentator 3.

The consumer 5 watches the broadcast on a television set 7 and at the same time runs a dedicated application on his or her tablet 8, i.e. on the 2nd screen device. The application retrieves the tags from the broadcast stream, e.g. with a audio watermarking detector or from a transmission device like WiFi of Bluetooth. For each tag the application performs the predefined action, e.g. upon receiving the first tag it shows the advertisement of the new XYZ car series.

The action is either defined local to the 2nd screen device or on a dedicated server 9. In the latter case the dedicated server 8 needs to be contacted for each tag that is received. Furthermore, additional personal data which are available to the 2nd screen device 8, like the current location, can be used to personalize the experience. For example, the consumer 5 not only sees the advertisement of the new XYZ car series, but also gets a contact to a local XYZ car dealer.

Transmission of the tag will generally take a certain time. Therefore, depending on the length of the tag and the bit-rate of the transmission channel, there is a short delay between the time when the commentator 3 chooses to insert the tag and the time when the 2nd screen device 8 has received the complete tag. Often this time delay is not a problem because of its short duration and due to the fact that the action should only come after the associated predefined situation, i.e. the consumer 5 first wants to see the great shot until the very end, and only then the advertisement. If this delay is not desirable the broadcast of the live event may be slightly delayed by a few seconds, as is anyway sometimes done for various reasons. In this case the insertion of the tag into the broadcast stream can be shifted into the past so that it is better aligned with the event.

Another way to reduce this time delay is to capitalize on the fact that in digital broadcasting it often takes much longer for the broadcast to reach the consumer via satellite or terrestrial antenna than via internet. In this scheme the broadcast content is continuously marked with increasing time stamps. If the commentator 3 tags a predefined situation, the tag is transmitted with the information about the last inserted time stamp and the time delay since this time stamp to the server 9. This server 9 then transmits the information to the 2nd screen device 8, in either pull or push mode. The 2nd screen device 8 decodes the time stamps until the transmitted one is received, waits until the end of the transmitted time delay, and performs the action defined for the tag exactly at that time in the content at which the commentator 3 inserted the tag.

Fig. 2 schematically shows a method for preparing audiovisual data for transmission. During retrieval 10 of the audiovisual data, e.g. with a camera 1 or from a storage system, an occurrence of one of a plurality of predefined situations in the audiovisual data is detected 11. The detected predefined situation is signaled 12 to a processing device 4 for inserting 13 an identifier associated to the detected predefined situation in the audiovisual data at or close to the point in time of occurrence of the predefined situation. Alternatively, the identifier is manually inserted 13 at this point in time.

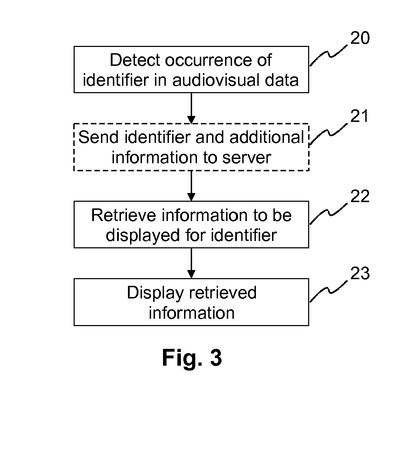

A method for synchronizing display of information on a second screen device with display of audiovisual data on a main screen device is depicted in Fig. 3. The second screen device 8, or an application running on this second screen device 8, detects 20 an occurrence of one of a plurality of predefined identifiers embedded in the audiovisual data displayed on the main screen device 7. This is done, for example, by detecting an audio watermark embedded in the audiovisual data or by receiving metadata added to the audiovisual data from the main screen device 7 or from a device connected to the main screen device 7 for receiving the audiovisual data. The second screen device 8 then retrieves 22 information to be displayed associated to the detected identifier, e.g. from an internal memory or from a server 9. Advantageously, in the latter case additional information is sent to the server 9 for personalizing the information to be displayed. Finally, the retrieved information is displayed 23 on the second screen device 8.

## Claims

1. A method for preparing audiovisual data for transmission, the method **comprising** the steps of:
- retrieving (10) the audiovisual data;
- detecting (11) an occurrence of one of a plurality of predefined situations in the audiovisual data; and
- inserting (13) an identifier associated to the detected predefined situation in the audiovisual data at or close to the point in time of occurrence of the predefined situation.

2. The method according to claim 1, **wherein** the detected predefined situation is signaled (12) to a processing device (4) for inserting (13) the identifier in the audiovisual data.

3. The method according to claim 1 or 2, **wherein** the audiovisual data are retrieved (10) by a camera (1) or from a storage system.

4. The method according to claim 2, **wherein** the detected predefined situation is signaled (12) to the processing device (4) responsive to pressing a button corresponding to the detected predefined situation on a tagging device (3).

5. The method according to one of claims 1 to 4, **wherein** the identifier associated to the detected predefined situation is a numeric or an alphanumeric value.

6. The method according to one of claims 1 to 5, **wherein** the identifier associated to the detected predefined situation is inserted (13) in the audiovisual data by audio watermarking or by adding metadata to the audiovisual data.

7. A method for synchronizing display of information on a second screen device (8) with display of audiovisual data on a main screen device (7), the method **comprising** the steps of:
- with the second screen device (8), detecting (20) an occurrence of one of a plurality of predefined identifiers embedded in the audiovisual data displayed on the main screen device (7);
- with the second screen device (8), retrieving (22) information to be displayed associated to the detected identifier; and
- displaying (23) the retrieved information on the second screen device (8).

8. The method according to claim 7, **wherein** the identifier is detected (20) by detecting an audio watermark embedded in the audiovisual data or by receiving metadata added to the audiovisual data from the main screen device (7) or from a device connected to the main screen device (7) for receiving the audiovisual data.

9. The method according to claim 7 or 8, **wherein** the information to be displayed associated to the detected identifier is retrieved (22) from a memory of the second screen device (8) or from a server (9).

10. The method according to claim 9, **further** comprising the step of sending (21) additional information to the server (9) for personalizing the information to be displayed.

11. A device (8) for display of information in synchronization with display of audiovisual data on a main screen device (7), **characterized in that** the device (8) is adapted to perform the steps of:
- detecting (20) an occurrence of one of a plurality of predefined identifiers embedded in the audiovisual data displayed on the main screen device (7);
- retrieving (22) information to be displayed associated to the detected identifier; and
- displaying (23) the retrieved information.

12. The device (8) according to claim 12, **wherein** the device (8) is adapted to detect (20) the identifier by detecting an audio watermark embedded in the audiovisual data or by receiving metadata added to the audiovisual data from the main screen device (7) or from a device connected to the main screen device (7) for receiving the audiovisual data.

13. The device (8) according to claim 11 or 12, **wherein** the device (8) is adapted to retrieve (22) the information to be displayed associated to the detected identifier from a memory or from a server (9).

14. The device (8) according to claim 13, **wherein** the device (8) is adapted to send (21) additional information to the server (9) for personalizing the information to be displayed.
